# FASCICULE DE BREVET EUROPEEN

(11) **EP 4 420 985 B1**
(45) Date de publication et mention de la délivrance du brevet: **16.04.2025**
(21) Numéro de dépôt: 24157877.2
(22) Date de dépôt: 15.02.2024
(51) Int. Cl.: B64D 27/12, B64D 29/06

(54) **ENSEMBLE DE PROPULSION D AÉRONEF COMPRENANT AU MOINS UN DISPOSITIF DE SURPRESSION ET AÉRONEF COMPORTANT AU MOINS UN TEL ENSEMBLE DE PROPULSION**
FLUGZEUGANTRIEBSANORDNUNG MIT MINDESTENS EINER ÜBERDRUCKVORRICHTUNG UND FLUGZEUG MIT MINDESTENS EINER SOLCHEN ANTRIEBSEINHEIT
AIRCRAFT PROPULSION ASSEMBLY COMPRISING AT LEAST ONE BOOSTER DEVICE AND AIRCRAFT COMPRISING AT LEAST ONE SUCH PROPULSION ASSEMBLY

(30) Priorité: 22.02.2023 FR 2301620
(43) Date de publication de la demande: 28.08.2024
(73) Titulaire: Airbus Operations (S.A.S.), 31060 Toulouse Cedex 9 (FR); Airbus (S.A.S.), 31700 Blagnac (FR)
(72) Inventeur: CZAPLA, Lionel, Toulouse (FR); PISSAVIN, Alexis, Blagnac (FR)
(74) Mandataire: Airbus-OPS SAS

(56) Documents cités:
- US-A1- 2011 240 137
- US-A1- 2011 297 787
- US-A1- 2013 043 350
- US-A1- 2020 130 811
- US-A1- 2022 289 396
- US-A1- 2022 402 622

## Description

La présente demande se rapporte à un ensemble de propulsion d'aéronef comprenant au moins un dispositif de surpression ainsi qu'à un aéronef comportant au moins un tel ensemble de propulsion.

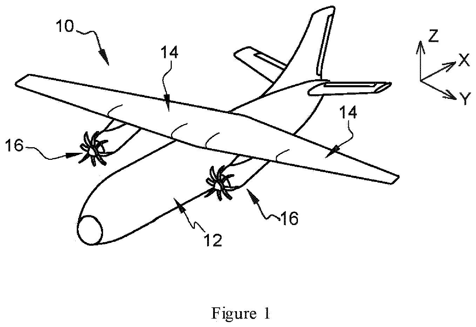

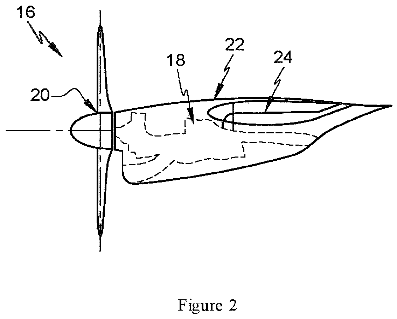

Selon un exemple visible sur la figure 1, un aéronef 10 comprend un fuselage 12, des ailes 14 qui s'étendent de part et d'autre du fuselage ainsi que des ensembles de propulsion 16 reliés aux ailes 14 et positionnés au-dessous des ailes 14. Selon une configuration visible sur la figure 2, un ensemble de propulsion 16 comprend un turbopropulseur 18, une hélice 20 entraînée en rotation par le turbopropulseur 18 ainsi qu'une nacelle 22 dans laquelle est positionné le turbopropulseur 18, l'hélice 20 étant positionnée à l'avant et à l'extérieur de la nacelle 22.

Selon une configuration, le turbopropulseur 18 fonctionnant à l'hydrogène, l'aéronef 10 comprend un système d'alimentation en hydrogène 24. L'hydrogène étant stocké à l'état cryogénique, le système d'alimentation en hydrogène 24 est configuré pour compresser l'hydrogène à une pression très élevée, le vaporiser puis le réchauffer avant d'alimenter le turbopropulseur 18.

En cas d'incidents, le système d'alimentation en hydrogène 24 peut générer une augmentation rapide de pression à l'intérieur de la nacelle 22. Pour résister à une telle surpression, la nacelle 22 est renforcée. Cette solution n'est pas satisfaisante car elle conduit à augmenter significativement la masse de la nacelle 22.

La présente invention vise à remédier à tout ou partie ces inconvénients.

A cet effet, l'invention a pour objet un ensemble de propulsion d'aéronef tel que revendiqué dans la revendication 1. Les demandes de brevets US2020/130811 et US2011/297787 décrivent le préambule de la revendication 1.

L'invention a également pour objet un aéronef comprenant au moins un tel ensemble de propulsion.

D'autres caractéristiques et avantages ressortiront de la description de l'invention qui va suivre, description donnée à titre d'exemple uniquement, en regard des dessins annexés parmi lesquels :
Fig. 1 est une vue en perspective d'un aéronef,
Fig. 2 est une vue latérale d'un ensemble de propulsion illustrant un mode de réalisation de l'art antérieur,
Fig. 3 est une vue latérale d'un ensemble de propulsion illustrant un premier mode de réalisation de l'invention,
Fig. 4 est une vue de dessus schématique d'une partie du carénage de l'ensemble de propulsion visible sur la figure 3,
Fig. 5 est une coupe schématique selon la ligne V-V de la figure 4,
Fig. 6 est une vue de dessus schématique d'une partie d'un carénage d'un ensemble de propulsion illustrant un autre mode de réalisation de l'invention,
Fig. 7 est une vue de dessus schématique d'une partie d'un carénage d'un ensemble de propulsion illustrant un autre mode de réalisation de l'invention,
Fig. 8 est une coupe schématique selon la ligne VIII-VIII de la figure 6,
Fig. 9 est une vue latérale schématique d'une partie d'un carénage d'un ensemble de propulsion illustrant un autre mode de réalisation de l'invention,
Fig. 10 est une vue de dessus schématique d'une partie du carénage visible sur la figure 9,
Fig. 11 est une coupe schématique selon la ligne XI-XI de la figure 10,
Fig. 12 est une vue en perspective schématique d'une partie d'un carénage d'un ensemble de propulsion illustrant un autre mode de réalisation de l'invention.

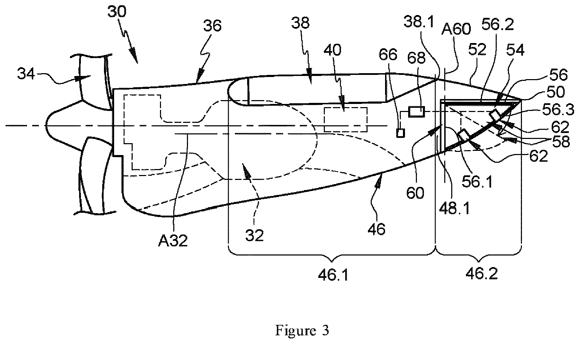

Selon un mode de réalisation visible sur la figure 3, un ensemble de propulsion 30 comprend une motorisation 32, une hélice 34 entraînée en rotation par la motorisation 32 ainsi qu'une nacelle 36 qui forme un carénage aérodynamique autour de la motorisation 32, l'hélice 34 étant positionnée à l'extérieur et à l'avant de la nacelle 36.

La motorisation 32 comprend un axe de rotation A32 sensiblement parallèle à celui de l'hélice 34.

Pour la suite de la description, une direction longitudinale est une direction parallèle à l'axe de rotation A32 de la motorisation 32. Un plan transversal est un plan perpendiculaire à l'axe de rotation A32 de la motorisation 32. Les notions avant et arrière font référence au sens d'écoulement de l'air autour de la motorisation 32 en vol, qui s'écoule de l'avant vers l'arrière.

Selon une application, un aéronef comprend au moins un ensemble de propulsion 30 positionné sous une aile 38 de l'aéronef et relié à cette dernière.

Bien entendu, l'invention n'est pas limitée à cette application ou à ce positionnement pour l'ensemble de propulsion 30.

L'ensemble de propulsion 30 est alimenté en carburant par un système d'alimentation en carburant 40 positionné en partie dans la nacelle 36. Selon une configuration, le carburant est sous forme gazeuse et le système d'alimentation en carburant est donc un système d'alimentation en carburant gazeux. Selon une autre configuration, le carburant est sous forme cryogénique liquide et le système d'alimentation en carburant 40 est donc un système d'alimentation en carburant cryogénique liquide.

Selon une configuration, l'ensemble de propulsion fonctionnant à l'hydrogène, le système d'alimentation en carburant 40 comprend au moins un élément parmi une pompe haute pression, un système de vaporisation, un échangeur thermique, des conduits, des vannes d'arrêt et des réservoirs tampons. Bien entendu, cette liste n'est pas exhaustive. De plus, l'invention n'est pas limitée à l'hydrogène comme carburant.

La nacelle 36 comprend une structure primaire assurant entre autres la reprise des efforts ainsi qu'une structure secondaire, sous la forme d'un carénage 46 aérodynamique, supportée par la structure primaire.

Ce carénage 46 comprend un ensemble de parois juxtaposées présentant chacune une face en contact avec un flux d'air lorsque l'aéronef est en vol.

Selon un mode de réalisation, le carénage 46 comprend une partie centrale 46.1 positionnée sous l'aile 38 et une partie arrière 46.2 décalée vers l'arrière par rapport à un plan vertical passant par le bord de fuite 38.1 de l'aile 38.

Selon un autre mode de réalisation, le carénage 46 ne comprend aucune partie décalée vers l'arrière par rapport à un plan vertical passant par le bord de fuite 38.1 de l'aile 38.

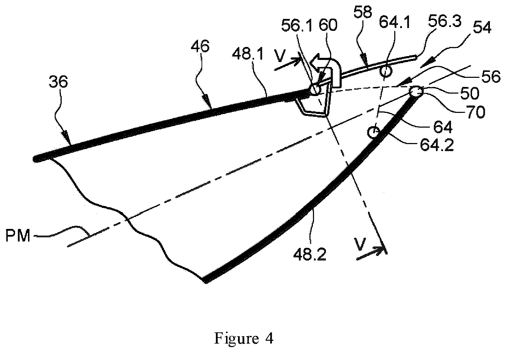

Les première et deuxième parois latérales 48.1, 48.2 sont sensiblement symétriques par rapport à un plan médian PM (visible sur la figure 4), sensiblement vertical, contenant le bord de fuite 50.

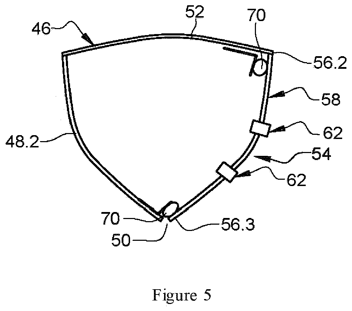

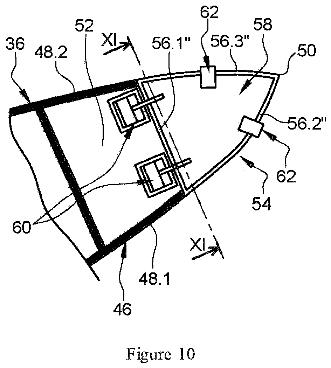

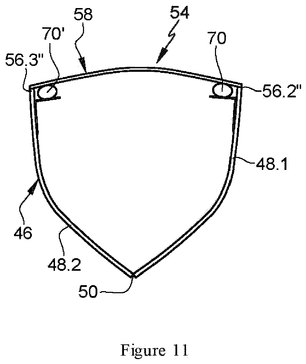

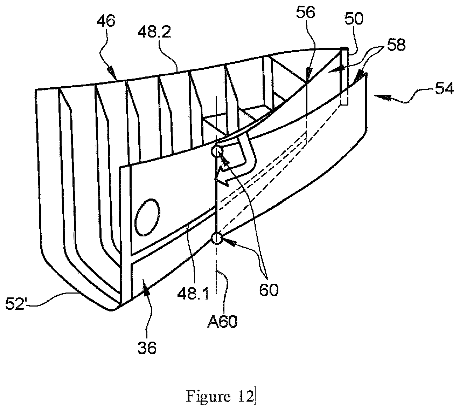

Selon un mode de réalisation visible sur les différentes figures 3 à 11, les première et deuxième parois latérales 48.1, 48.2 forment, dans un plan transversal, une forme approximativement en V avec une pointe orientée vers le bas, le bord de fuite 50 s'étendant jusqu'à la partie centrale 46.1 du carénage 46. Selon un autre mode de réalisation visible sur la figure 12, le bord de fuite 50 est sensiblement vertical et le carénage 46 comprend une paroi inférieure 52' reliant les première et deuxième parois latérales 48.1, 48.2 jusqu'au bord de fuite 50.

Quelle que soit sa configuration, le carénage 46 sépare une zone intérieure et une zone extérieure, la motorisation 32 et au moins une partie du système d'alimentation en carburant 40 étant positionnées dans la zone intérieure.

Selon une caractéristique de l'invention, l'ensemble de propulsion 30 comprend un dispositif de surpression 54 configuré pour occuper un état inactivé, lorsque la zone intérieure présente une pression inférieure à un seuil donné, dans lequel le dispositif de surpression 54 forme une barrière sensiblement étanche aux fluides entre les zones intérieure et extérieure ainsi qu'un état activé, lorsque la zone intérieure présente une pression supérieure ou égale au seuil donné, dans lequel le dispositif de surpression 54 permet de faire communiquer les zones intérieure et extérieure.

Selon une configuration, le carénage 46 comprend des première et deuxième parois latérales 48.1, 48.2 ainsi qu'un bord de fuite 50 positionné au niveau de l'extrémité arrière du carénage 46, les parois latérales 48.1, 48.2 se rejoignant au niveau du bord de fuite 50. En présence d'une partie arrière 46.2 (à l'arrière de l'aile 38), le carénage 46 comprend une paroi supérieure 52, positionnée dans un plan sensiblement horizontal, reliant les première et deuxième parois latérales 48.1, 48.2 et s'étendant jusqu'au bord de fuite 50.

Le dispositif de surpression 54 comprend au moins une ouverture 56, traversant le carénage 46, qui permet de faire communiquer les zones intérieure et extérieure ainsi que, pour chaque ouverture 56, au moins une porte 58 configurée pour occuper une position fermée, correspondant à l'état inactivé du dispositif de surpression 54, dans laquelle la porte 58 obture l'ouverture 56 et une position ouverte, correspondant à l'état activé du dispositif de surpression 54, dans laquelle la porte 58 dégage au moins partiellement l'ouverture 56.

Chaque porte 58 s'étend dans le prolongement du carénage 46 de manière à limiter les perturbations aérodynamiques.

En complément, le dispositif de surpression 54 comprend, pour chaque porte 58, au moins une articulation 60 reliant la porte 58 et une partie fixe de l'ensemble de propulsion 30, comme la structure primaire ou secondaire de la nacelle 36, ainsi qu'au moins un système de verrouillage/déverrouillage 62 écarté de l'articulation 60 et configuré pour occuper un état verrouillé dans lequel le système de verrouillage/déverrouillage 62 maintient la porte 58 dans la position fermée et un état déverrouillé dans lequel le système de verrouillage/déverrouillage permet à la porte 58 de passer de la position fermée à la position ouverte. Selon une configuration, le système de verrouillage/déverrouillage 62 est disposé à l'extrémité de la porte 58 opposée à l'articulation 60.

Selon un mode de réalisation, l'articulation 60 est configurée de telle sorte que la porte 58 s'écarte du carénage 46 en direction de la zone extérieure lorsqu'elle passe de la position fermée à la position ouverte.

Selon une configuration, chaque articulation 60 comprend plusieurs charnières de type col de cygne. Selon une autre configuration, chaque articulation 60 comprend plusieurs charnières de type piano.

Selon un agencement, pour chaque porte 58, l'articulation 60 présente un axe de pivotement A60 positionné approximativement dans un plan transversal et à l'avant de la porte 58. Cet agencement permet d'éviter qu'un flux d'air s'écoulant autour du carénage 46 en vol ne force l'ouverture de la porte 58.

Selon un mode de réalisation, le dispositif de surpression 54 comprend, pour chaque porte 58, au moins un moyen de retenue 64, comme un câble par exemple, reliant la porte 58 à une partie fixe de l'ensemble de propulsion et limitant l'ouverture de la porte 58 au-delà de la position ouverte. Le moyen de retenue 64 permet de limiter l'ouverture de la porte 58 à une section de passage prédéterminée.

Chaque moyen de retenue 64 présente une première extrémité 64.1 reliée à la porte 58 et écartée de l'articulation 60 ainsi qu'une deuxième extrémité 64.2 reliée à la nacelle 36, notamment à sa structure primaire ou secondaire, et écartée de l'articulation 60.

Selon une configuration, chaque système de verrouillage/déverrouillage 62 est configuré de manière à automatiquement passer de l'état verrouillé à l'état déverrouillé dès que la pression dans la zone intérieure devient supérieure ou égale au seuil donné.

Selon une autre configuration, chaque système de verrouillage/déverrouillage 62 est pilotable. Selon un mode de réalisation, le dispositif de surpression 54 comprend au moins un détecteur de fuite de dihydrogène, prenant par exemple la forme d'un détecteur de dihydrogène, configuré pour détecter la présence de dihydrogène dans la zone intérieure du carénage 46 ou d'un capteur de pression 66 positionné dans la zone intérieure et configuré pour mesurer une pression dans la zone intérieure, ainsi qu'une commande 68 renseignée par le capteur de fuite ou le capteur de pression 66 et configurée pour contrôler chaque système de verrouillage/déverrouillage 62 et commander un changement d'état de chaque système de verrouillage/déverrouillage 62 de l'état verrouillé à l'état déverrouillé dès que la pression mesurée par le capteur de pression 66 est supérieure ou égale au seuil donné ou lorsqu'une fuite est détectée. En complément ou de manière alternative, le dispositif de surpression 54 comprend une commande actionnable par une personne, comme le pilote par exemple, positionnée dans la cabine de pilotage, configurée pour provoquer un changement d'état du système de surpression.

Le dispositif de surpression 54 peut comprendre, pour chaque porte 58, au moins un actionneur relié à la porte et configuré pour provoquer un changement de position de la porte 58.

Selon un agencement, le dispositif de surpression 54 comprend au moins un joint d'étanchéité 70 intercalé entre le carénage 46 et chaque porte 58 lorsque cette dernière est dans la position fermée.

Selon un premier mode de réalisation visible sur les figures 3 à 5, l'ouverture 56 est positionnée au niveau de la première paroi latérale 48.1. L'ouverture 56 est délimitée par un premier bord 56.1 sensiblement vertical, positionné à l'avant de l'ouverture 56 et s'étendant jusqu'au bord de fuite 50, un deuxième bord 56.2 sensiblement horizontal, reliant le premier bord 56.1 et le bord de fuite 50 ainsi qu'un troisième bord 56.3 qui suit le bord de fuite 50 et relie les premier et deuxième bords 56.1, 56.2. Selon une configuration, le deuxième bord 56.2 suit la zone de jonction reliant la première paroi latérale 48.1 et la paroi supérieure 52.

Selon ce premier mode de réalisation, le dispositif de surpression 54 comprend une seule porte 58 délimitée par des premier, deuxième et troisième côtés qui suivent, lorsque la porte 58 est en position fermée, respectivement les premier, deuxième et troisième bords 56.1, 56.2, 56.3 de l'ouverture 56.

L'articulation 60 est positionnée au niveau du premier bord 56.1 de l'ouverture 56. Le dispositif de surpression 54 comprend deux systèmes de verrouillage/déverrouillage 62 répartis sur le troisième bord 56.3 de l'ouverture 56. Au moins un joint d'étanchéité 70 est relié à la nacelle 36, notamment à sa structure primaire ou secondaire, et s'étend le long des deuxième et troisième bords 56.2, 56.3.

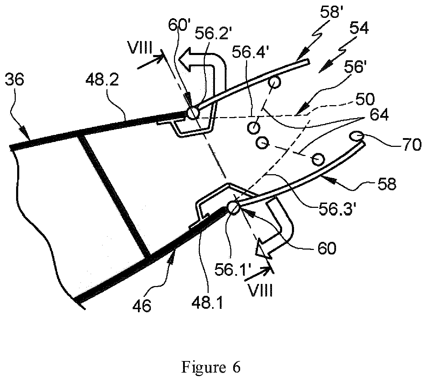

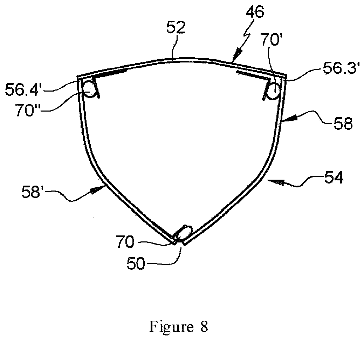

Selon un deuxième mode de réalisation visible sur les figures 6 et 8, l'ouverture 56' est positionnée au niveau des première et deuxième parois latérales 48.1, 48.2. L'ouverture 56' est délimitée par :
a. un premier bord 56.1' qui s'étend sur la première paroi latérale 48.1 et relie le bord de fuite 50 et la paroi supérieure 52,
b. un deuxième bord 56.2' qui s'étend sur la deuxième paroi latérale 48.2 et relie le bord de fuite 50 et la paroi supérieure 52, les premier et deuxième bords 56.1', 56.2' étant positionnés dans un même plan transversal,
c. un troisième bord 56.3' reliant le premier bord 56.1' et le bord de fuite 50, positionné au niveau de la zone de jonction reliant la première paroi latérale 48.1 et la paroi supérieure 52,
d. un quatrième bord 56.4' reliant le deuxième bord 56.2' et le bord de fuite 50, positionné au niveau de la zone de jonction reliant la deuxième paroi latérale 48.2 et à la paroi supérieure 52.

Selon ce deuxième mode de réalisation, le dispositif de surpression 54 comprend des première et deuxième portes 58, 58' prolongeant respectivement les première et deuxième parois latérales 48.1, 48.2. La première porte 58 comprend des premier, deuxième et troisième côtés qui suivent, lorsque la première porte 58 est en position fermée, respectivement le premier bord 56.1', le troisième bord 56.3' et le bord de fuite 50 de l'ouverture 56'. La deuxième porte 58' comprend des premier, deuxième et troisième côtés qui suivent, lorsque la deuxième porte 58' est en position fermée, respectivement le deuxième bord 56.2', le quatrième bord 56.4' et le bord de fuite 50 de l'ouverture 56'.

Selon ce deuxième mode de réalisation, le dispositif de surpression 54 comprend au moins une première articulation 60 reliant la première porte 58 au premier bord 56.1' de l'ouverture 56' ainsi qu'au moins une deuxième articulation 60' reliant la deuxième porte 58' au deuxième bord 56.2' de l'ouverture 56'.

Le dispositif de surpression 54 comprend des systèmes de verrouillage/déverrouillage 62 répartis sur les troisièmes côtés des première et deuxième portes 58, 58', situés au niveau du bord de fuite 50 lorsqu'elles sont en position fermée. En complément, le dispositif de surpression 54 comprend un premier joint d'étanchéité 70 positionné au niveau du troisième côté de la première porte 58, intercalé entre les première et deuxième portes 58, 58' lorsqu'elles sont en position fermée, un deuxième joint 70' positionné au niveau du troisième bord 56.3' de l'ouverture 56', intercalé entre la première porte 58 et la nacelle 36, ainsi qu'un troisième joint 70" positionné au niveau du quatrième bord 56.4' de l'ouverture 56', intercalé entre la deuxième porte 58' et la nacelle 36.

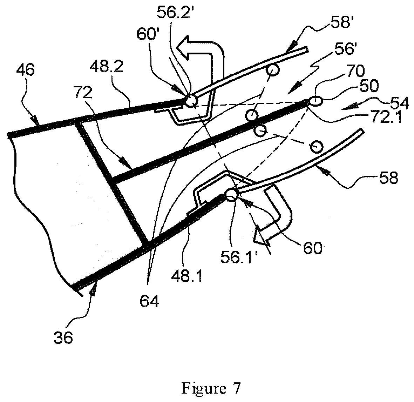

Selon un troisième mode de réalisation visible sur la figure 7 et proche de celui visible sur la figure 6, le dispositif de surpression 54 comprend une ouverture 56' ainsi que des première et deuxième portes 58, 58' sensiblement identiques à celles du deuxième mode de réalisation. En complément, la nacelle comprend un renfort médian 72 présentant un bord arrière 72.1 qui suit le bord de fuite 50 et contre lequel prennent appui les première et deuxième portes 58, 58' en position fermée. Selon ce troisième mode de réalisation, le premier joint d'étanchéité 70 est relié au renfort médian 72 et non à la première porte 58.

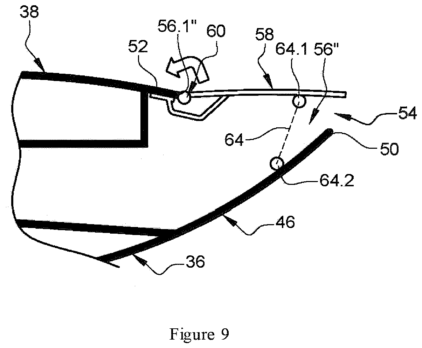

Selon un quatrième mode de réalisation visible sur les figures 9 à 11, l'ouverture 56" est positionnée au niveau de la paroi supérieure 52. Elle est délimitée par un premier bord 56.1" positionné dans un plan transversal reliant les zones de jonction qui relient la paroi supérieure 52 et les première et deuxième parois latérales 48.1, 48.2, un deuxième bord 56.2" qui suit la zone de jonction reliant la paroi supérieure 52 et la première paroi latérale 48.1 et qui s'étend du premier bord 56.1" jusqu'au bord de fuite 50 ainsi qu'un troisième bord 56.3" qui suit la zone de jonction reliant la paroi supérieure 52 et la deuxième paroi latérale 48.2 et s'étend du premier bord 56.1" jusqu'au bord de fuite 50.

Selon ce quatrième mode de réalisation, le dispositif de surpression 54 comprend une seule porte 58 délimitée par des premier, deuxième et troisième côtés qui suivent, lorsque la porte 58 est en position fermée, respectivement les premier, deuxième et troisième bords 56.1", 56.2", 56.3" de l'ouverture 56".

L'articulation 60 est positionnée au niveau du premier bord 56.1" de l'ouverture 56". Le dispositif de surpression 54 comprend au moins des premier et deuxième systèmes de verrouillage/déverrouillage 62, 62', au moins un premier système de verrouillage/déverrouillage 62 étant positionné au niveau du deuxième bord 56.2" de l'ouverture 56", au moins un deuxième système de verrouillage/déverrouillage 62' étant positionné au niveau du troisième bord 56.3" de l'ouverture 56". Selon ce quatrième mode de réalisation, le dispositif de surpression 54 comprend un premier joint d'étanchéité 70, relié à la nacelle 36, qui s'étend le long du deuxième bord 56.2" de l'ouverture 56 ainsi qu'un deuxième joint d'étanchéité 70', relié à la nacelle 36, qui s'étend le long du troisième bord 56.3".

Bien entendu, l'invention n'est pas limitée aux modes de réalisation précédemment décrits. Ainsi, comme illustré sur la figure 12, l'ouverture 56 et la porte 58 peuvent présenter chacune plus de trois bords ou côtés et avoir différentes géométries.

Quel que soit le mode de réalisation, l'ouverture 56 doit avoir une superficie suffisante, supérieure à 500 cm², par exemple aux alentours de 4000 cm², pour limiter les risques d'endommagement du carénage 46 en cas de surpression à l'intérieur de ce dernier.

## Revendications

1. Ensemble de propulsion d'aéronef comprenant une motorisation (32), un système d'alimentation en carburant (40) configuré pour alimenter la motorisation (32) ainsi qu'un carénage (46) séparant une zone intérieure et une zone extérieure, la motorisation (32) et au moins une partie du système d'alimentation en carburant (40) étant positionnées dans la zone intérieure, l'ensemble de propulsion comprenant un dispositif de surpression (54) configuré pour occuper soit un état inactivé, lorsque la zone intérieure présente une pression inférieure à un seuil donné, et dans lequel le dispositif de surpression (54) forme une barrière sensiblement étanche entre les zones intérieure et extérieure, soit un état activé, lorsque la zone intérieure présente une pression supérieure ou égale au seuil donné, et dans lequel le dispositif de surpression (54) comprend au moins une ouverture (56,56') traversant le carénage (46) et faisant communiquer les zones intérieure et extérieure, ainsi que, pour chaque ouverture (56, 56'), au moins une porte (58) configurée pour occuper une position fermée, correspondant à l'état inactivé du dispositif de surpression (54), dans laquelle la porte (58) obture l'ouverture (56,56') et une position ouverte, correspondant à l'état activé du dispositif de surpression (54), dans laquelle la porte (58) dégage au moins partiellement l'ouverture (56, 56'), le carénage (46) comprenant des première et deuxième parois latérales (48.1, 48.2) ainsi qu'un bord de fuite (50), **caractérisé en ce que** les parois latérales (48.1, 48.2) se rejoignent au niveau du bord de fuite (50) et **en ce que** l'ouverture (56, 56') du dispositif de surpression (54) est positionnée au niveau d'au moins une des première et deuxième parois latérales (48.1, 48.2) et s'étend jusqu'au bord de fuite (50).

2. Ensemble de propulsion selon la revendication 1, **caractérisé en ce que** le dispositif de surpression (54) comprend :
- pour chaque porte (58), au moins une articulation (60) reliant la porte (58) et une partie fixe de l'ensemble de propulsion,
- au moins un système de verrouillage/déverrouillage (62) configuré pour occuper un état verrouillé dans lequel le système de verrouillage/déverrouillage (62) maintient la porte (58) dans la position fermée et un état déverrouillé dans lequel le système de verrouillage/déverrouillage permet à la porte (58) de passer de la position fermée à la position ouverte.

3. Ensemble de propulsion selon la revendication précédente, **caractérisé en ce que** chaque système de verrouillage/déverrouillage (62) est configuré pour automatiquement passer de l'état verrouillé à l'état déverrouillé dès que la pression dans la zone intérieure devient supérieure ou égale au seuil donné.

4. Ensemble de propulsion selon la revendication 2, **caractérisé en ce que** le dispositif de surpression (54) comprend une commande configurée pour provoquer un changement d'état du système de verrouillage/déverrouillage (62).

5. Ensemble de propulsion selon la revendication précédente, **caractérisé en ce que** le dispositif de surpression (54) comprend, pour chaque porte (58), au moins un actionneur relié à la porte et configuré pour provoquer un changement de position de la porte (58).

6. Ensemble de propulsion selon l'une des revendications 2 à 5, **caractérisé en ce que** l'articulation (60) est configurée de telle sorte que la porte (58) s'écarte du carénage (46) en direction de la zone extérieure lorsque la porte (58) passe de la position fermée à la position ouverte, l'articulation (60) présentant un axe de pivotement (A60) positionné approximativement dans un plan transversal et à l'avant de la porte (58).

7. Ensemble de propulsion selon l'une des revendications 2 à 6, **caractérisé en ce que** le dispositif de surpression (54) comprend, pour chaque porte (58), au moins un moyen de retenue (64) reliant la porte (48) à une partie fixe de l'ensemble de propulsion.

8. Ensemble de propulsion selon l'une des revendications 2 à 7, **caractérisé en ce que** le dispositif de surpression (54) comprend au moins un joint d'étanchéité (70) intercalé entre le carénage (46) et chaque porte (58) lorsque cette dernière est dans la position fermée.

9. Ensemble de propulsion selon l'une quelconque des revendications précédentes, **caractérisé en ce que** l'ouverture (56') du dispositif de surpression est positionnée au niveau des première et deuxième parois latérales (48.1, 48.2) et **en ce que** le dispositif de surpression (54) comprend une première porte (58) prolongeant la première paroi latérale (48.1) ainsi qu'une deuxième porte (58') prolongeant la deuxième paroi latérale (48.2).

10. Aéronef comprenant au moins un ensemble de propulsion selon l'une des revendications précédentes.

## Patentansprüche

1. Flugzeugantriebsanordnung, beinhaltend eine Motorisierung (32), ein Treibstoffversorgungssystem (40), das dazu konfiguriert ist, die Motorisierung (32) zu versorgen, sowie eine Verkleidung (46), die einen Innenbereich und einen Außenbereich trennt, wobei die Motorisierung (32) und mindestens ein Teil des Treibstoffversorgungssystems (40) in dem Innenbereich positioniert sind, wobei die Antriebsanordnung eine Überdruckvorrichtung (54) beinhaltet, die dazu konfiguriert ist, entweder, wenn der Innenbereich einen Druck unter einem gegebenen Schwellenwert aufweist, einen nicht aktivierten Zustand, in dem die Überdruckvorrichtung (54) eine im Wesentlichen dichte Barriere zwischen dem Innen- und dem Außenbereich bildet, oder, wenn der Innenbereich einen Druck über oder gleich dem gegebenen Schwellenwert aufweist, einen aktivierten Zustand einzunehmen, und wobei die Überdruckvorrichtung (54) mindestens eine Öffnung (56, 56'), die die Verkleidung (46) durchquert und den Innen- und den Außenbereich in Kommunikation bringt, sowie, für jede Öffnung (56, 56'), mindestens eine Tür (58) beinhaltet, die dazu konfiguriert ist, eine geschlossene Stellung, die dem nicht aktivierten Zustand der Überdruckvorrichtung (54) entspricht und in der die Tür (58) die Öffnung (56, 56') versperrt, und eine geöffnete Stellung, die dem aktivierten Zustand der Überdruckvorrichtung (54) entspricht und in der die Tür (58) die Öffnung (56, 56') mindestens teilweise freigibt, einzunehmen, wobei die Verkleidung (46) eine erste und eine zweite Seitenwand (48.1, 48.2) sowie eine Hinterkante (50) beinhaltet, **dadurch gekennzeichnet, dass** sich die Seitenwände (48.1, 48.2) im Bereich der Hinterkante (50) treffen und dass die Öffnung (56, 56') der Überdruckvorrichtung (54) im Bereich mindestens einer von der ersten und der zweiten Seitenwand (48.1, 48.2) positioniert ist und sich bis zu der Hinterkante (50) erstreckt.

2. Antriebsanordnung nach Anspruch 1, **dadurch gekennzeichnet, dass** die Überdruckvorrichtung (54) Folgendes beinhaltet:
- für jede Tür (58) mindestens ein Gelenk (60), das die Tür (58) und einen festen Teil der Antriebsanordnung verbindet,
- mindestens ein Verriegelungs-/Entriegelungssystem (62), das dazu konfiguriert ist, einen verriegelten Zustand, in dem das Verriegelungs-/Entriegelungssystem (62) die Tür (58) in der geschlossenen Stellung hält, und einen entriegelten Zustand, in dem das Verriegelungs-/Entriegelungssystem gestattet, dass die Tür (58) von der geschlossenen Stellung in die geöffnete Stellung übergeht, einzunehmen.

3. Antriebsanordnung nach dem vorhergehenden Anspruch, **dadurch gekennzeichnet, dass** jedes Verriegelungs-/Entriegelungssystem (62) dazu konfiguriert ist, automatisch von dem verriegelten Zustand in den entriegelten Zustand überzugehen, sobald der Druck in dem Innenbereich größer als oder gleich dem gegebenen Schwellenwert wird.

4. Antriebsanordnung nach Anspruch 2, **dadurch gekennzeichnet, dass** die Überdruckvorrichtung (54) eine Steuerung beinhaltet, die dazu konfiguriert ist, eine Zustandsänderung des Verriegelungs-/Entriegelungssystems (62) zu bewirken.

5. Antriebsanordnung nach dem vorhergehenden Anspruch, **dadurch gekennzeichnet, dass** die Überdruckvorrichtung (54) für jede Tür (58) mindestens ein Betätigungselement beinhaltet, das mit der Tür verbunden ist und dazu konfiguriert ist, eine Stellungsänderung der Tür (58) zu bewirken.

6. Antriebsanordnung nach einem der Ansprüche 2 bis 5, **dadurch gekennzeichnet, dass** das Gelenk (60) so konfiguriert ist, dass sich die Tür (58) von der Verkleidung (46) in Richtung des Außenbereichs entfernt, wenn die Tür (58) von der geschlossenen Stellung in die geöffnete Stellung übergeht, wobei das Gelenk (60) eine Schwenkachse (A60) aufweist, die ungefähr in einer Querebene vorne an der Tür (58) positioniert ist.

7. Antriebsanordnung nach einem der Ansprüche 2 bis 6, **dadurch gekennzeichnet, dass** die Überdruckvorrichtung (54) für jede Tür (58) mindestens ein Rückhaltemittel (64) beinhaltet, das die Tür (48) mit einem festen Teil der Antriebsanordnung verbindet.

8. Antriebsanordnung nach einem der Ansprüche 2 bis 7, **dadurch gekennzeichnet, dass** die Überdruckvorrichtung (54) mindestens eine Dichtung (70) beinhaltet, die zwischen die Verkleidung (46) und jede Tür (58) eingefügt ist, wenn sich letztere in der geschlossenen Stellung befindet.

9. Antriebsanordnung nach einem der vorhergehenden Ansprüche, **dadurch gekennzeichnet, dass** die Öffnung (56') der Überdruckvorrichtung im Bereich der ersten und der zweiten Seitenwand (48.1, 48.2) positioniert ist und dass die Überdruckvorrichtung (54) eine erste Tür (58), die die erste Seitenwand (48.1) verlängert, sowie eine zweite Tür (58'), die die zweite Seitenwand (48.2) verlängert, beinhaltet.

10. Flugzeug, das mindestens eine Antriebsanordnung nach einem der vorhergehenden Ansprüche beinhaltet.

## Claims

1. Aircraft propulsion unit comprising a motor (32), a fuel supplying system (40) configured to supply fuel to the motor (32), and a fairing (46) that separates an inner zone and an outer zone, the motor (32) and at least part of the fuel supplying system (40) being positioned in the inner zone, the propulsion unit comprising a pressure relief device (54) configured to assume either an inactivated state, when the inner zone exhibits a pressure lower than a given threshold, and in which the pressure relief device (54) forms a substantially leaktight barrier between the inner and outer zones, or an activated state, when the inner zone exhibits a pressure greater than or equal to the given threshold, and in which the pressure relief device (54) comprises at least one opening (56, 56') that goes through the fairing (46) and establishes communication between the inner and outer zones, and, for each opening (56, 56'), at least one door (58) configured to assume a closed position, corresponding to the inactivated state of the pressure relief device (54), in which the door (58) closes off the opening (56, 56'), and an open position, corresponding to the activated state of the pressure relief device (54), in which the door (58) at least partially uncovers the opening (56, 56'), the fairing (46) comprising first and second lateral walls (48.1, 48.2) and a trailing edge (50), **characterized in that** the lateral walls (48.1, 48.2) meet at the trailing edge (50), and **in that** the opening (56, 56') of the pressure relief device (54) is positioned in at least one of the first and second lateral walls (48.1, 48.2) and extends to the trailing edge (50).

2. Propulsion unit according to Claim 1, **characterized in that** the pressure relief device (54) comprises:
- for each door (58), at least one articulation (60) connecting the door (58) and a fixed part of the propulsion unit,
- at least one locking/unlocking system (62) configured to assume a locked state, in which the locking/unlocking system (62) keeps the door (58) in the closed position, and an unlocked state, in which the locking/unlocking system allows the door (58) to move from the closed position to the open position.

3. Propulsion unit according to the preceding claim, **characterized in that** each locking/unlocking system (62) is configured to automatically move from the locked state to the unlocked state as soon as the pressure in the inner zone becomes greater than or equal to the given threshold.

4. Propulsion unit according to Claim 2, **characterized in that** the pressure relief device (54) comprises a controller configured to bring about a change in state of the locking/unlocking system (62).

5. Propulsion unit according to the preceding claim, **characterized in that** the pressure relief device (54) comprises, for each door (58), at least one actuator connected to the door and configured to bring about a change in position of the door (58).

6. Propulsion unit according to one of Claims 2 to 5, **characterized in that** the articulation (60) is configured such that the door (58) is moved away from the fairing (46) in the direction of the outer zone when the door (58) moves from the closed position to the open position, the articulation (60) having a pivot axis (A60) positioned approximately in a transverse plane at the front of the door (58).

7. Propulsion unit according to one of Claims 2 to 6, **characterized in that** the pressure relief device (54) comprises, for each door (58), at least one retaining means (64) connecting the door (48) to a fixed part of the propulsion unit.

8. Propulsion unit according to one of Claims 2 to 7, **characterized in that** the pressure relief device (54) comprises at least one seal (70) interposed between the fairing (46) and each door (58) when the latter is in the closed position.

9. Propulsion unit according to any one of the preceding claims, **characterized in that** the opening (56') of the pressure relief device is positioned in the first and second lateral walls (48.1, 48.2), and **in that** the pressure relief device (54) comprises a first door (58) which extends the first lateral wall (48.1) and a second door (58') which extends the second lateral wall (48.2).

10. Aircraft comprising at least one propulsion unit according to one of the preceding claims.
